# EUROPEAN PATENT SPECIFICATION

(11) **EP 1 768 319 B1**
(45) Date of publication and mention of the grant of the patent: **21.05.2008**
(21) Application number: 06019929.6
(22) Date of filing: 22.09.2006
(51) Int. Cl.: H04L 12/46

(54) **Method of inter-RPR-ring bridge redundancy**
Verfahren zur Redundanzbereitstellung in Brücken zwischen RPR-Ringen
Procédé de redondance de passerelles entre anneaux RPR

(30) Priority: 26.09.2005 CN 200510105025
(43) Date of publication of application: 28.03.2007
(73) Proprietor: Huawei Technologies Co., Ltd., Longgang District, Shenzhen, Guangdong 518129 (CN)
(72) Inventor: Li, Jian, Longgang Dist. Shenzhen 518129 Guangdong (CN); Zhang, Yilong, Longgang Dist. Shenzhen 518129 Guangdong (CN); He, Zhifeng, Longgang Dist. Shenzhen 518129 Guangdong (CN)
(74) Representative: Manitz, Finsterwald & Partner GbR

(56) References cited:
- EP-A- 1 328 090
- EP-A2- 0 349 099
- US-A1- 2003 154 315

## Description

### Field of the Technology

The present invention relates to Resilient Packet Ring (RPR) techniques, and more particularly, to a method of inter-RPR ring bridge redundancy.

### Background of the Invention

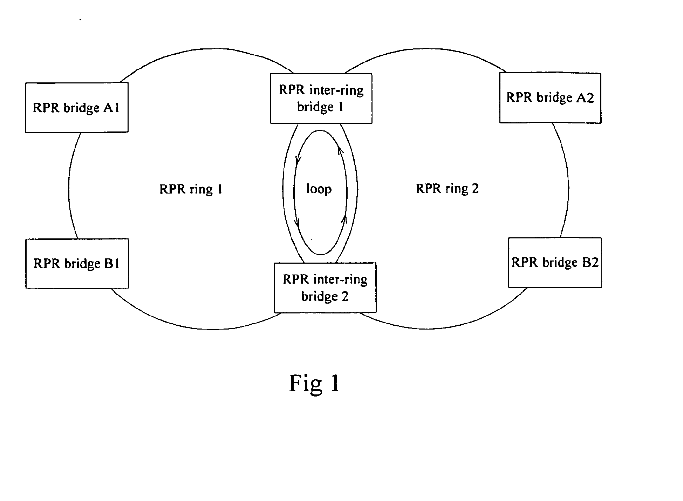

As the fast development of diversified Metropolitan Area Network (MAN) techniques, the RPR is used by more and more MANs for its advanced technique, effective investment, ascendant performance and diversity of services supported. The RPR, of which the architecture and technique are newly designed to satisfy the requirements of the packet MAN, is a ring network composed of packet switch devices.The network adopting the RPR technique is called an RPR ring network and can be called an RPR ring for short. The packet switch device on the RPR ring is called an RPR device. When the RPR device adopts a Media Access Control (MAC) address with 48 bits used in the Ethernet as an address identity (ID) to identify the RPR device uniquely, and bears a layer-two packet by way of Ethernet Over RPR, the RPR ring can also be called a bridge mode RPR. The device on the RPR ring can also be called an RPR bridge and the MAC address of the RPR bridge can be called an RPR MAC address. As shown in Figure 1, the architecture of two RPR rings interconnecting at two RPR bridges is illustrated.

There are two RPR rings in Figure 1, one is RPR ring 1 and the other is RPR ring 2. There are four RPR bridges on each RPR ring. The RPR ring 1 and the RPR ring 2 interconnect at RPR inter-ring bridge 1 and RPR inter-ring bridge 2. An RPR inter-ring bridge is an RPR bridge which is on at least two RPR rings at the same time and it is in charge of forwarding a data packet between the at least two RPR rings. To simplify the description, the RPR inter-ring bridge will be called an inter-ring bridge for short; the RPR bridge will be called a bridge for short hereinafter.

In the RPR ring, since layer-two Ethernet packets are carried and the packets between the RPR rings are forwarded according to an address analysis protocol (e.g. MAC), a loop would be brought between the two RPR inter-ring bridges interconnecting the two RPR rings. That is, there would be a broadcast storm phenomenon between the RPR inter-ring bridge 1 and the RPR inter-ring bridge 2 shown in Figure 1. To avoid the loop and the broadcast storm problem, a minimum spanning tree without the loop is generated by prune branches through the Spanning Tree Protocol (STP) or Rapid Spanning Tree protocol (RSTP). And the layer-two Ethernet packets are forwarded along the minimum spanning tree to avoid a loop in the layer-two communication. In addition, when there is a failure in any device or link in the layer-two network, a new forwarding tree would be recalculated through the minimum spanning tree calculation of the STP or the RSTP to ensure the normal work after a failure appears.Although a loop in the multi-ring nodes can be avioded by adopting the STP or the RSTP, the convergence time of the service increases after a fault appears in the RPR bridge ring, although the constringency speed of the STP and the RSTP is slow, even by using the RSTP, a second-level recovery can be achieved. As a result, the network communication time is prolonged and the burden of the network communication is aggravated.

European Patent EP 0 349 099 A2 addresses a method for improving communications in a bridge network between end nodes involving sensing thunking configurations and executing binding schemes to make certain daughter bridges involved in the trunking conditions behave as a plurality of bridges and forward messages in the correct time sequence. This document discloses a designated bridge and daughter bridges corresponding to the primary inter-ring bridge and the secondary inter-ring bridges of the present invention.

### Summary of the Invention

The present invention provides a method of inter-RPR-ring bridge redundancy, by which the RPR ring may recover rapidly after a failure in the RPR ring, and the normal use of services on the RPR ring may be ensured.

The inter-RPR-ring bridge redundancy method includes: configuring a priority for each inter-ring bridge; constituting a redundancy group by more than one inter-ring bridge, which interconnects two RPR rings; configuring one inter-ring bridge in the redundancy group as a primary inter-ring bridge which is in charge of forwarding packets; configuring the other(s) as secondary inter-ring bridge(s); and electing an inter-ring bridge with the highest priority and having an inter-ring communication ability to be the primary inter-ring bridge, when the redundancy group changes.

Wherein, the change of the redundancy group includes the change of the topology of the RPR rings consisting the redundancy group.

The method further includes each inter-ring bridge configures a node information table to store redundancy group information of each inter-ring bridge in the redundancy group. And the change of the redundancy group includes the change of the redundancy group information of an inter-ring bridge in the redundancy group.

The method further includes that configuring a control message; when the redundancy group information of an inter-ring bridge in the redundancy group changes, the inter-ring bridge broadcasting the control message carrying the redundancy group information of itself in the redundancy group; and when other inter-ring bridge(s) receives (receive) the control message, electing an inter-ring bridge with the highest priority and having the inter-ring communication ability to be the primary inter-ring bridge.

The step of electing an inter-ring bridge with the highest priority and having the inter-ring communication ability to be the primary inter-ring bridge includes when the primary inter-ring bridge has no inter-ring communication ability or there is an inter-ring bridge with a higher priority and having the inter-ring communication ability in the redundancy group, the primary inter-ring bridge exiting the primary state; and when a secondary inter-ring bridge has the inter-ring communication ability and there is (are) no other inter-ring bridge(s) with a higher priority and having the inter-ring communication ability in the redundancy group, the secondary inter-ring bridge upgrading to be the primary inter-ring bridge.

And the step of the primary inter-ring bridge exiting the primary state includes the primary inter-ring bridge judging whether it has the inter-ring communication ability, if it has no such ability, exiting the primary state; otherwise, the primary inter-ring bridge judging whether there is an inter-ring bridge with a higher priority and having the inter-ring communication ability; when there is such an inter-ring bridge, the primary inter-ring bridge exiting the primary state.

The step of the secondary inter-ring bridge upgrading to be the primary inter-ring bridge includes the secondary inter-ring bridge judging whether it has the inter-ring communication ability, if it has the inter-ring communication ability, the secondary inter-ring bridge judging whether there is an inter-ring bridge with a higher priority and having the inter-ring communication ability; when there is no such an inter-ring bridge, the secondary inter-ring bridge upgrading to be the primary inter-ring bridge.

The step of judging whether it has the inter-ring communication ability includes judging whether both its two RPR bridge interfaces work normally, if they work normally, it has the inter-ring communication ability; otherwise, it has no inter-ring communication ability.

The step of the primary inter-ring bridge judging whether there is an inter-ring bridge with a higher priority and having the inter-ring communication ability includes judging whether there is an inter-ring bridge with a higher priority in the protection group; if there is such an inter-ring bridge in the protection group, judging whether the inter-ring bridge with a higher priority in the protection group has the inter-ring communication ability; and if the inter-ring bridge with a higher priority in the protection group has the inter-ring communication ability, the primary inter-ring bridge exiting the primary state.

The step of the secondary inter-ring bridge judging whether there is an inter-ring bridge with a higher priority and having the inter-ring communication ability includes judging whether there is an inter-ring bridge with a higher priority in the redundancy group, if there is no such an inter-ring bridge the secondary inter-ring bridge upgrading to be the primary inter-ring bridge; if there is such an inter-ring bridge, judging whether the inter-ring bridge with a higher priority in the redundancy group has the inter-ring communication ability; and if the inter-ring bridge with a higher priority in the redundancy group has no such inter-ring communication ability, the secondary inter-ring bridge upgrading to be the primary inter-ring bridge.

Each inter-ring bridge configures a node information table storing at least priority information of each inter-ring bridge in the redundancy group; and the step of judging whether there is an inter-ring bridge with a higher priority includes looking up the node information table configured by itself; and judging whether there is an inter-ring bridge with a higher priority in the redundancy group according to the records in the node information table.

The step of judging whether the inter-ring bridge with a higher priority in the redundancy group has the inter-ring communication ability includes: judging whether the two RPR bridge interfaces of the inter-ring bridge with a higher priority can communicate with the two RPR bridge interfaces on the two RPR rings respectively; if they can communicate with the two RPR bridge interfaces , the inter-ring bridge has the inter-ring communication ability; otherwise, the inter-ring bridge has no inter-ring communication ability.

The method further includes each inter-ring bridge refreshing its own topology structure table; wherein the step of judging whether the two RPR bridge interfaces of the inter-ring bridge with a higher priority can communicate with the two RPR bridge interfaces on the two RPR rings respectively includes: judging whether the two RPR bridge interfaces of the inter-ring bridge with a higher priority respectively exist in the corresponding topology structure tables of the two RPR rings where the inter-ring bridge belongs; if the two RPR bridge interfaces exists in the tables, the two RPR bridge interfaces of the inter-ring bridge with a higher priority can communicate with the two RPR bridge interfaces of itself on the two RPR rings respectively; otherwise, the two RPR bridge interfaces of the inter-ring bridge with a higher priority can not communicate with the two RPR bridge interfaces of itself on the two RPR rings respectively.

The redundancy group information comprises at least priority information of the inter-ring bridge and the primary/secondary state.

And the primary inter-ring bridge is in charge of forwarding all packets or packets with the same characteristics.

The method of inter-RPR-ring bridge redundancy in accordance with the present invention makes inter-ring bridges constitute a redundancy group, elects one inter-ring bridge as a primary inter-ring bridge in the redundancy group which is in charge of forwarding packets and configuring the priority of every inter-ring bridge. When the redundancy group changes, the inter-ring bridge with the highest priority and having the ability of packet forwarding is elected to be the primary inter-ring bridge. According to the method provided by the present invention, an RPR ring may recover rapidly after the RPR ring changes. As a result, the services on the RPR ring may be ensured to be normal and the network communication delay and the burden of the network communication may be reduced.

### Brief Description of the Drawings

Figure 1 is a schematic diagram illustrating the architecture of two interconnecting RPR rings in the prior art;
Figure 2 is a flow chart illustrating the redundancy of a primary inter-ring bridge in accordance with an embodiment of the present invention;
Figure 3 is a flow chart illustrating the redundancy of a secondary inter-ring bridge in accordance with an embodiment of the present invention.

### Detailed Description of the Invention

According to an embodiment of the present invention, more than one inter-ring bridge, which is the interconnection of the two RPR rings, is set to constitute a redundancy group. One inter-ring bridge in the redundancy group is configured as a primary inter-ring bridge, while the other(s) is (are) secondary inter-ring bridge(s). The primary inter-ring bridge is in charge of forwarding data packets between the two RPR rings. However, when the primary inter-ring bridge becomes invalid, a secondary inter-ring bridge upgrades to be the primary inter-ring bridge continuing to forward data packets between the two RPR rings.

Here, the step of transmitting the data packets between the two RPR rings can be implemented by that the primary inter-ring bridge takes charge of forwarding all packets or packets with the same characteristics according to specific configurations. And the secondary inter-ring bridge(s) is (are) not in charge of forwarding these data packets.

Whether the primary inter-ring bridge is invalid or whether a new primary inter-ring bridge needs to be elected can be reflected through the change of the topology of the RPR ring. As the topology detection and the topology convergence of the RPR ring only need 50 ms, after a change of the RPR ring topology, the time for electing a new primary inter-ring bridge through a special topology detection of the RPR ring will be less than 100 ms.

Therefore, both the primary inter-ring bridge and the secondary inter-ring bridge(s) in the present embodiment can use the special topology detection function of the RPR ring to obtain the topology information of other inter-ring bridge(s) in the redundancy group. In this way, a primary inter-ring bridge in the redundancy group can be elected in time when a change of the topology in the group takes place.

A node information table can be configured in each inter-ring bridge in the redundancy group, the node information including at least a bridge ID, a bridge priority, a current state of the bridge and RPR MAC information of the current two interfaces of the inter-ring bridge. Here, the reason that there are two interfaces in the inter-ring bridge is that the inter-ring bridge connects two RPR rings and the two interfaces of the inter-ring bridge are used to connect the two RPR rings respectively.

Here, the bridge priority can be configured according to actual needs, for example, the smaller value the higher priority, or the larger value the higher priority. In addition, if the priorities of the bridges are identical, the priority of the bridge can be determined according to value of the bridge ID.

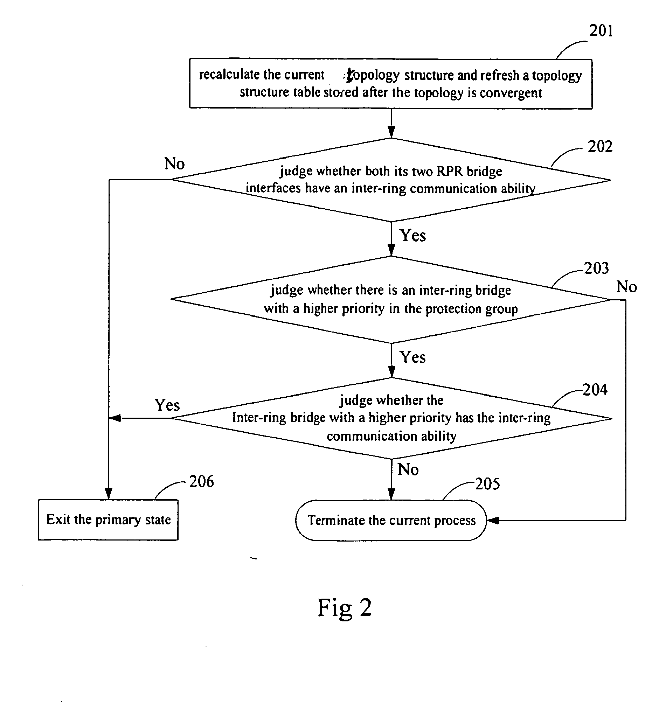

As shown in Figure 2, when there is a change on the topology of the RPR ring and the primary inter-ring bridge in the redundancy group receives a topology message, the following steps will be executed.

Step 201: the primary inter-ring bridge recalculates the current topology structure after receiving the topology message, and refresh a topology structure table stored in the primary inter-ring bridge after the topology is convergent.

Specifically, since the primary inter-ring bridge is on both the two RPR rings at the same time, there are two topology structure tables stored in the primary inter-ring bridge corresponding to the two RPR rings respectively. According to the topology structure of the network shown in Figure 1, if a topology message is received from the RPR ring 1, the primary inter-ring bridge will refresh the topology structure table of the RPR ring 1 stored in it. While, if a topology message is received from the RPR ring 2, the primary inter-ring bridge will refresh the topology structure table of the RPR ring 2 stored in it.

Step 202: the primary inter-ring bridge judges whether both its two RPR bridge interfaces have inter-ring communication ability, if both the two interfaces have the ability, proceeds to Step 203; and otherwise, proceeds to Step 206.

Here, the step of judging whether both the two RPR bridge interfaces have the inter-ring communication ability can be implemented by that the primary inter-ring bridge judges whether the two RPR bridge interfaces of itself can forward packets normally, if they can forward packets normally, it means that they have the inter-ring communication ability; and otherwise, it means that they do not have the inter-ring communication ability.

Step 203: the primary inter-ring bridge looks up the node information table stored in it and judges whether there is an inter-ring bridge with a higher priority in the redundancy group, if there is such an inter-ring bridge, proceeds to Step 204; and otherwise, proceeds to Step 205.

The judging in Step 203 should be implemented in all the nodes in the redundancy group, no matter whether the previous state of the inter-ring bridge is invalid or not. In this way, it is ensured that none of the inter-ring bridge with a high priority will be neglected. Some inter-ring bridges on an RPR ring are invalid due to a link failure or other reasons. However, if the link is recovered, the inter-ring bridge with a higher priority will reappear on the RPR ring and it is eligible to be a primary inter-ring bridge.

Step 204: the primary inter-ring bridge judges whether the inter-ring bridge with a higher priority has the inter-ring communication ability. If the inter-ring bridge has the inter-ring communication ability, proceeds to Step 206; otherwise, proceeds to Step 205.

Here, there may be more than one inter-ring bridge with a higher priority in the redundancy group due to the change of the network topology. Step 206 will be performed as long as there is one inter-ring bridge with a higher priority and having the inter-ring communication ability.

Wherein, the step of the primary inter-ring bridge judging whether the inter-ring bridge with a higher priority has the inter-ring communication ability can be performed as follows: first, assume that the inter-ring bridge with a higher priority is bridge A, the two RPR bridge interfaces of bridge A on each of the two RPR rings are RPR bridge interface A1 and RPR bridge interface A2 respectively, the current primary inter-ring bridge is bridge B, and the two RPR bridge interfaces of bridge B on each of the two RPR rings are RPR bridge interface B1 and RPR bridge interface B2. The step of the primary inter-ring bridge judging whether the inter-ring bridge with a higher priority has the inter-ring communication ability includes that judging whether the RPR bridge interface A 1 of the bridge A can communicate with the RPR bridge interface B 1 of the bridge B on the RPR ring 1 and whether the RPR bridge interface A2 of the bridge A can communicate with the RPR bridge interface B2 of the bridge B on the RPR bridge 2. If the RPR bridge interface A 1 of the bridge A can communicate with the RPR bridge interface B1 of the bridge B and the RPR bridge interface A2 of the bridge A can communicate with the RPR bridge interface B2 of the bridge B, the bridge A has the inter-ring communication ability.

Here, the step of judging whether the RPR bridge interface A1 of the bridge A can communicate with the RPR bridge interface B 1 of the bridge B on the RPR ring 1 includes that the bridge B looks up the topology information table of the RPR ring 1 stored in it and determines whether there is the RPR bridge interface A1. If there is the RPR bridge interface A1, the RPR bridge interface A1 of the bridge A can communicate with the RPR bridge interface B 1 of the bridge B on the RPR ring 1. Otherwise, the RPR bridge interface A 1 of the bridge A can not communicate with the RPR bridge interface B 1 of the bridge B on the RPR ring 1. A same method can be adopted to judge whether the RPR bridge interface A2 of the bridge A can communicate with the RPR bridge interface B2 of the bridge B or not. Hence, no more description will be given.

Step 205: the primary inter-ring bridge terminates the current process.

This step shows that the current primary inter-ring bridge still works well and there is no inter-ring bridge with a higher priority and having the inter-ring communication ability.

Step 206: the primary inter-ring bridge exits the primary state.

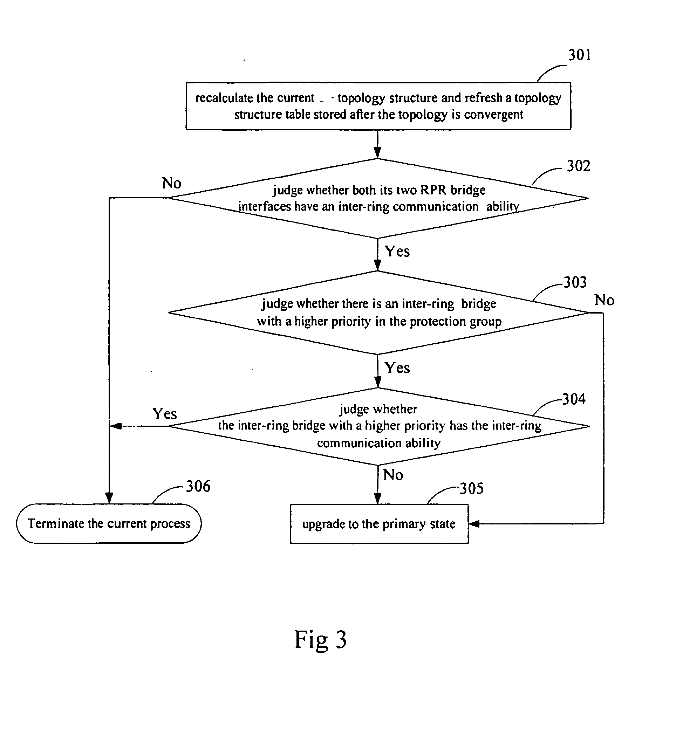

When a primary inter-ring bridge receives and processes a topology message, each secondary inter-ring bridge in the redundancy group receives and processes the topology message as well. The specific processing procedure of each secondary inter-ring bridge is shown in Figure 3.

Step 301: the secondary inter-ring bridge recalculates the current topology structure after receiving the topology message and refresh the topology structure table stored in it after the topology is convergent.

The specific refreshing method is the same as the refreshing method performed by the primary inter-ring bridge shown in Step 201. Thus no more description will be given.

Step 302: the secondary inter-ring bridge judges whether both its two RPR bridge interfaces have the inter-ring communication ability. If both the two interfaces have the inter-ring communication ability, proceeds to Step 303; and otherwise, proceeds to step 306.

Here, the method of judging is the same as that shown in Step 202. Thus no more description will be given.

Step 303: the secondary inter-ring bridge looks up the node information table stored in it and judges whether there is an inter-ring bridge with a higher priority in the redundancy group. If there is such an inter-ring bridge, proceeds to Step 304; and otherwise, proceeds to Step 305.

The judging in Step 303 should be implemented in all the nodes in the redundancy group, no matter whether the state of the inter-ring bridge is invalid or not.

Step 304: the secondary inter-ring bridge judges whether the inter-ring bridge with a higher priority has the inter-ring communication ability. If the inter-ring bridge has the inter-ring communication ability, proceeds to Step 306; and otherwise, proceeds to Step 305.

Here, there may be more than one inter-ring bridge with a higher priority in the redundancy group due to the change of the network topology. Step 306 will be performed as long as there is one inter-ring bridge with a higher priority and having the inter-ring communication ability.

Wherein, the step of the secondary inter-ring bridge judging whether the inter-ring bridge with a higher priority has the inter-ring communication ability can adopt the same method as that in Step 204.

Step 305: the secondary inter-ring bridge upgrades to the primary state.

Step 306: the secondary inter-ring bridge terminates the current process.

Step 306 shows that in the redundancy group, there is an inter-ring bridge with a higher priority and having the inter-ring communication ability. So the secondary inter-ring bridge is not eligible to be a primary inter-ring bridge.

Generally speaking, the flows shown in Figure 2 and Figure 3 can both ensure that when the topologies of the two RPR rings where the redundancy group belongs change, the current primary inter-ring bridge in the redundancy group is the one with the highest priority and having the inter-ring communication ability.

A waiting time can be further configured in the primary inter-ring bridge and the secondary inter-ring bridge(s) in accordance with the present embodiment. The primary inter-ring bridge will wait the configured time when it is ready to exit the primary state, that is, between Step 204 and 206. And the secondary inter-ring bridge which is ready to upgrade to the primary state will also wait the configured time before upgrading to the primary state, that is, between Step 304 and 305. After determining that the state of the inter-ring bridge with the highest priority and having the inter-ring communication ability is steady, the corresponding Step 206 and Step 305 will be performed respectively. Otherwise, the corresponding Step 205 and Step 306 will be performed respectively.

A parameter of the number of topology messages to be waited can also be configured in the primary inter-ring bridge and the secondary inter-ring bridge(s), that is, the primary inter-ring bridge which is ready to exit the primary state and the secondary inter-ring bridge which is ready to upgrade to the primary state will first wait the configured number of topology messages. And then if the state of the inter-ring bridge with the highest priority and having the ability to forward is steady, corresponding implementations will be performed.

Each inter-ring bridge in the redundancy group can discover whether there is a new inter-ring bridge being added or deleted through the topology message received. However, the inter-ring bridge in the redundancy group can not discover the change of the priorities of other inter-ring bridges in the redundancy group. Therefore, a new control message can be added to the redundancy group to transmit the state of each inter-ring bridge. The control message carries at least a bridge ID of the inter-ring bridge, a bridge priority of the inter-ring bridge, the current state of the inter-ring bridge, RPR MAC information of the current two interfaces of the inter-ring bridge. Here, the information carried in the control message is called redundancy group information of the inter-ring bridge. When the protection information of an inter-ring bridge changes, the inter-ring bridge will broadcast a control message to other bridge(s) in the redundancy group informing the change of its state. The node information table of each inter-ring bridge in the redundancy group will be refreshed according to its current state and the received control message from other inter-ring bridge(s). Specifically, the redundancy group information of other inter-ring bridge(s) stored in this inter-ring bridge is refreshed according to the received control message. Well, the redundancy group information of this inter-ring bridge is refreshed according to its own configurations and its state which is calculated by the current RPR ring topology.

For example, the priority of one inter-ring bridge in the redundancy group is degraded due to such reasons as a manual configuration. After the priority of the inter-ring bridge is degraded, it will broadcast a control message carrying the changed redundancy group information to other inter-ring bridge(s) in the redundancy group. Other bridge(s) in the redundancy group will refresh its (their) own node information table(s) according to the received redundancy group information and perform corresponding processes. The specific processing procedure of the primary inter-ring bridge is the same as that shown in Figure 2. The specific processing procedure of the secondary inter-ring bridge(s) is (are) the same as that shown in Figure 3. So no more description will be given.

The control message may be broadcasted to other inter-ring bridge(s) in the redundancy group not only when the priority of the inter-ring bridge changes, but also when the state of the inter-ring bridge changes. Here, the change of the state may be a result from the change of the topology or the change caused by a manual configuration or other reasons.

In addition, the control message may be sent to other bridge(s) in the redundancy group not only when the redundancy group information changes, but also periodically. Under the circumstance that the control message is sent periodically, when receiving the control message each time, the primary inter-ring bridge will implement the flow showed in Figure 2. And the secondary inter-ring bridge(s) will implement the flow showed in Figure 3.

Under the circumstance that the control message is sent periodically, a parameter of the number of control messages to be waited can be configured. The primary inter-ring bridge which is ready to exit the primary state and the secondary inter-ring bridge which is ready to upgrade to the primary state, will wait the configured number of control messages first. After that, if the state of the inter-ring bridge with the highest priority and having the inter-ring communication ability is still steady, corresponding implementations will be performed.

The above embodiments introduce only the situation that a redundancy group is formed by two RPR rings. In real networks, the general situation is that one inter-ring bridge belongs to multiple redundancy groups. Here, one entry should be added to the node information table of each inter-ring bridge. The entry is call group ID, which is used to illustrate which redundancy group formed by which two RPR rings that the inter-ring bridge belongs to. The group ID entry should be added to the control message correspondingly.

The foregoing is only preferred embodiments of this invention. The protection scope of this invention, however, is not limited to the above description. Any change or substitution, within the technical scope disclosed by this invention, but those skilled in the art should be covered by the protection scope of this invention as set by the appended claims.

## Claims

1. A method for an inter-Resilient Packet Ring (RPR)-ring bridge redundancy, comprising:
configuring a priority for each inter-ring bridge;
constituting a redundancy group by more than one inter-ring bridge on two RPR rings;
configuring one inter-ring bridge in the redundancy group as a primary inter-ring bridge which is in charge of forwarding packets;
configuring other inter-ring bridge(s) as secondary inter-ring bridge(s); and
electing an inter-ring bridge with the highest priority and having an inter-ring communication ability to be the primary inter-ring bridge, when the redundancy group changes (202, 203, 204, 206, 302, 303, 304, 305).

2. The method according to Claim 1, wherein, the change of the redundancy group comprises:
the change of the topology of the RPR rings consisting the redundancy group.

3. The method according to Claim 1, further comprising:
each inter-ring bridge configuring a node information table to store redundancy group information of each inter-ring bridge in the redundancy group.

4. The method according to Claim 3, wherein, the change of the redundancy group comprises:
the change of the redundancy group information of an inter-ring bridge in the redundancy group.

5. The method according to Claim 4, further comprising:
configuring a control message;
when the redundancy group information of an inter-ring bridge in the redundancy group changes, the inter-ring bridge broadcasting the control message carrying the redundancy group information of itself in the redundancy group; and
when other inter-ring bridge(s) receives (receive) the control message, electing an inter-ring bridge with the highest priority and having the inter-ring communication ability to be the primary inter-ring bridge.

6. The method according to Claim 1, wherein, the step of electing an inter-ring bridge with the highest priority and having the inter-ring communication ability to be the primary inter-ring bridge comprises:
when the primary inter-ring bridge has no inter-ring communication ability or there is an inter-ring bridge with a higher priority and having the inter-ring communication ability in the redundancy group, the primary inter-ring bridge exiting the primary state (202, 203, 204, 206); and
when a secondary inter-ring bridge has the inter-ring communication ability and there is (are) no other inter-ring bridge(s) with a higher priority and having the inter-ring communication ability in the redundancy group, the secondary inter-ring bridge upgrading to be the primary inter-ring bridge (302, 303, 304, 305).

7. The method according to Claim 6, wherein, the step of the primary inter-ring bridge exiting the primary state comprises:
the primary inter-ring bridge judging whether it has the inter-ring communication ability (202), if it has no such ability, exiting the primary state (206); otherwise, the primary inter-ring bridge judging whether there is an inter-ring bridge with a higher priority and having the inter-ring communication ability (203, 204); when there is such an inter-ring bridge, the primary inter-ring bridge exiting the primary state (206).

8. The method according to Claim 6, wherein, the step of the secondary inter-ring bridge upgrading to be the primary inter-ring bridge comprises:
the secondary inter-ring bridge judging whether it has the inter-ring communication ability (302), if it has the inter-ring communication ability, the secondary inter-ring bridge judging whether there is an inter-ring bridge with a higher priority and having the inter-ring communication ability (303, 304); when there is no such an inter-ring bridge, the secondary inter-ring bridge upgrading to be the primary inter-ring bridge (305).

9. The method according to Claim 7 or 8, wherein, the step of judging whether it has the inter-ring communication ability comprises:
judging whether both its two RPR bridge interfaces work normally, if they work normally, it has the inter-ring communication ability; otherwise, it has no inter-ring communication ability.

10. The method according to Claim 7, wherein, the step of the primary inter-ring bridge judging whether there is an inter-ring bridge with a higher priority and having the inter-ring communication ability comprises:
judging whether there is an inter-ring bridge with a higher priority in the protection group (203);
if there is such an inter-ring bridge in the protection group, judging whether the inter-ring bridge with a higher priority in the protection group has the inter-ring communication ability (204); and
if the inter-ring bridge with a higher priority in the protection group has the inter-ring communication ability, the primary inter-ring bridge exiting the primary state (206).

11. The method according to Claim 8, wherein, the step of the secondary inter-ring bridge judging whether there is an inter-ring bridge with a higher priority and having the inter-ring communication ability comprises:
judging whether there is an inter-ring bridge with a higher priority in the redundancy group (303),
if there is no such an inter-ring bridge the secondary inter-ring bridge upgrading to be the primary inter-ring bridge (305);
if there is such an inter-ring bridge, judging whether the inter-ring bridge with a higher priority in the redundancy group has the inter-ring communication ability (304); and
if the inter-ring bridge with a higher priority in the redundancy group has no such inter-ring communication ability, the secondary inter-ring bridge upgrading to be the primary inter-ring bridge (305).

12. The method according to Claim 10 or 11, wherein, each inter-ring bridge configures a node information table storing at least priority information of each inter-ring bridge in the redundancy group; and
the step of judging whether there is an inter-ring bridge with a higher priority comprises:
looking up the node information table configured by itself; and
judging whether there is an inter-ring bridge with a higher priority in the redundancy group according to the records in the node information table.

13. The method according to Claim 10 or 11, wherein, the step of judging whether the inter-ring bridge with a higher priority in the redundancy group has the inter-ring communication ability comprises:
judging whether the two RPR bridge interfaces of the inter-ring bridge with a higher priority can communicate with the two RPR bridge interfaces on the two RPR rings respectively;
if they can communicate with the two RPR bridge interfaces , the inter-ring bridge has the inter-ring communication ability; otherwise, the inter-ring bridge has no inter-ring communication ability.

14. The method according to Claim 13, further comprising:
each inter-ring bridge refreshing its own topology structure table (201, 301);
wherein the step of judging whether the two RPR bridge interfaces of the inter-ring bridge with a higher priority can communicate with the two RPR bridge interfaces on the two RPR rings respectively comprises:
judging whether the two RPR bridge interfaces of the inter-ring bridge with a higher priority respectively exist in the corresponding topology structure tables of the two RPR rings where the inter-ring bridge belongs;
if the two RPR bridge interfaces exists in the tables, the two RPR bridge interfaces of the inter-ring bridge with a higher priority can communicate with the two RPR bridge interfaces of itself on the two RPR rings respectively; otherwise, the two RPR bridge interfaces of the inter-ring bridge with a higher priority can not communicate with the two RPR bridge interfaces of itself on the two RPR rings respectively.

15. The method according to Claim 3, 4 or 5, wherein, the redundancy group information comprises at least priority information of the inter-ring bridge and the primary/secondary state.

16. The method according to claim 1, 2, 3, 4, 5, 6, 7, 8, 10 or 11, wherein, the primary inter-ring bridge is in charge of forwarding all packets or packets with the same characteristics.

## Patentansprüche

1. Verfahren für eine Resilient Packet Ring-Zwischenringbrückenredundanz (RPR-Zwischenringbrückenredundanz), das umfasst, dass
eine Priorität für jede Zwischenringbrücke konfiguriert wird;
eine Redundanzgruppe durch mehr als eine Zwischenringbrücke an zwei RPR-Ringen gebildet wird;
eine Zwischenringbrücke in der Redundanzgruppe als eine primäre Zwischenringbrücke konfiguriert wird, die für ein Weiterleiten von Paketen verantwortlich ist;
eine andere Zwischenringbrücke/andere Zwischenringbrücken als sekundäre Zwischenringbrücke(n) konfiguriert wird/werden; und
eine Zwischenringbrücke mit der höchsten Priorität und mit einer Zwischenringkommunikationsfähigkeit gewählt wird, um die primäre Zwischenringbrücke zu sein, wenn sich die Redundanzgruppe ändert (202, 203, 204, 206, 302, 303, 304, 305).

2. Verfahren nach Anspruch 1, wobei die Änderung der Redundanzgruppe die Änderung der Topologie der RPR-Ringe umfasst, die die Redundanzgruppe bilden.

3. Verfahren nach Anspruch 1, das ferner umfasst, dass
jede Zwischenringbrücke eine Knoteninformationstabelle konfiguriert, um eine Redundanzgruppeninformation jeder Zwischenringbrücke in der Redundanzgruppe zu speichern.

4. Verfahren nach Anspruch 3, wobei die Änderung der Redundanzgruppe die Änderung der Redundanzgruppeninformation einer Zwischenringbrücke in der Redundanzgruppe umfasst.

5. Verfahren nach Anspruch 4, das ferner umfasst, dass
eine Steuernachricht konfiguriert wird;
wenn sich die Redundanzgruppeninformation einer Zwischenringbrücke in der Redundanzgruppe ändert, die Zwischenringbrücke die Steuernachricht, die die Redundanzgruppeninformation über sie selbst trägt, in der Redundanzgruppe aussendet; und
wenn eine andere Zwischenringbrücke/andere Zwischenringbrücken die Steuernachricht empfängt/empfangen, eine Zwischenringbrücke mit der höchsten Priorität und mit der Zwischenringkommunikationsfähigkeit gewählt wird, um die primäre Zwischenringbrücke zu sein.

6. Verfahren nach Anspruch 1, wobei der Schritt des Wählens einer Zwischenringbrücke mit der höchsten Priorität und mit der Zwischenringkommunikationsfähigkeit, um die primäre Zwischenringbrücke zu sein, umfasst, dass
wenn die primäre Zwischenringbrücke keine Zwischenringkommunikationsfähigkeit hat oder es eine Zwischenringbrücke mit einer
höheren Priorität und mit der Zwischenringkommunikationsfähigkeit in der Redundanzgruppe gibt, die primäre Zwischenringbrücke den Primärzustand verlässt (202, 203, 204, 206); und
wenn eine sekundäre Zwischenringbrücke die Zwischenringkommunikationsfähigkeit hat und es keine andere(n) Zwischenringbrücke(n) mit einer höheren Priorität und mit der Zwischenringkommunikationsfähigkeit in der Redundanzgruppe gibt, die sekundäre Zwischenringbrücke hochgestuft wird, um die primäre Zwischenringbrücke zu sein (302, 303, 304, 305).

7. Verfahren nach Anspruch 6, wobei der Schritt, dass die primäre Zwischenringbrücke den Primärzustand verlässt, umfasst, dass
die primäre Zwischenringbrücke beurteilt, ob sie die Zwischenringkommunikationsfähigkeit hat (202), und wenn sie keine solche Fähigkeit hat, den Primärzustand verlässt (206); andernfalls die primäre Zwischenringbrücke beurteilt, ob es eine Zwischenringbrücke mit einer höheren Priorität und mit der Zwischenringkommunikationsfähigkeit gibt (203, 204); wenn es solch eine Zwischenringbrücke gibt, die primäre Zwischenringbrücke den Primärzustand verlässt (206).

8. Verfahren nach Anspruch 6, wobei der Schritt des Hochstufens der sekundären Zwischenringbrücke, um die primäre Zwischenringbrücke zu sein, umfasst, dass
die sekundäre Zwischenringbrücke beurteilt, ob sie die Zwischenringkommunikationsfähigkeit hat (302), und wenn sie die Zwischenringkommunikationsfähigkeit hat, die sekundäre Zwischenringbrücke beurteilt, ob es eine Zwischenringbrücke mit einer höheren Priorität und mit der Zwischenringkommunikationsfähigkeit gibt (303, 304); wenn es keine solche Zwischenringbrücke gibt, die sekundäre Zwischenringbrücke hochgestuft wird, um die primäre Zwischenringbrücke zu sein (305).

9. Verfahren nach Anspruch 7 oder 8, wobei der Schritt des Beurteilens, ob sie die Zwischenringkommunikationsfähigkeit hat, umfasst, dass
beurteilt wird, ob ihre beiden RPR-Brückenschnittstellen normal arbeiten, und wenn sie normal arbeiten, sie die Zwischenringkommunikationsfähigkeit hat; andernfalls hat sie keine Zwischenringkommunikationsfähigkeit.

10. Verfahren nach Anspruch 7, wobei der Schritt, dass die primäre Zwischenringbrücke beurteilt, ob eine Zwischenringbrücke mit einer
höheren Priorität und mit der Zwischenringkommunikationsfähigkeit vorhanden ist, umfasst, dass
beurteilt wird, ob es eine Zwischenringbrücke mit einer höheren Priorität in der Schutzgruppe gibt (203);
wenn es solch eine Zwischenringbrücke in der Schutzgruppe gibt, beurteilt wird, ob die Zwischenringbrücke mit einer höheren Priorität in der Schutzgruppe die Zwischenringkommunikationsfähigkeit hat (204); und
wenn die Zwischenringbrücke mit einer höheren Priorität in der Schutzgruppe die Zwischenringkommunikationsfähigkeit hat, die primäre Zwischenringbrücke den Primärzustand verlässt (206).

11. Verfahren nach Anspruch 8, wobei der Schritt, dass die sekundäre Zwischenringbrücke beurteilt, ob es eine Zwischenringbrücke mit
einer höheren Priorität und mit der Zwischenringkommunikationsfähigkeit gibt, umfasst, dass
beurteilt wird, ob es eine Zwischenringbrücke mit einer höheren Priorität in der Redundanzgruppe gibt (303),
wenn es keine solche Zwischenringbrücke gibt, die sekundäre Zwischenringbrücke hochgestuft wird, um die primäre Zwischenringbrücke zu sein (305);
wenn es solch eine Zwischenringbrücke gibt, beurteilt wird, ob die Zwischenringbrücke mit einer höheren Priorität in der Redundanzgruppe die Zwischenringkommunikationsfähigkeit hat (304); und
wenn die Zwischenringbrücke mit einer höheren Priorität in der Redundanzgruppe keine solche Zwischenringkommunikationsfähigkeit hat, die sekundäre Zwischenringbrücke hochgestuft wird, um die primäre Zwischenringbrücke zu sein (305).

12. Verfahren nach Anspruch 10 oder 11, wobei jede Zwischenringbrücke eine Knoteninformationstabelle konfiguriert, die zumindest eine Prioritätsinformation jeder Zwischenringbrücke in der Redundanzgruppe speichert; und
wobei der Schritt des Beurteilens, ob es eine Zwischenringbrücke mit einer höheren Priorität gibt, umfasst, dass
in der durch sie selbst konfigurierten Knoteninformationstabelle nachgeschlagen wird; und
entsprechend den Aufzeichnungen in der Knoteninformationstabelle beurteilt wird, ob es eine Zwischenringbrücke mit einer höheren Priorität in der Redundanzgruppe gibt.

13. Verfahren nach Anspruch 10 oder 11, wobei der Schritt des Beurteilens, ob die Zwischenringbrücke mit einer höheren Priorität in der Redundanzgruppe die Zwischenringkommunikationsfähigkeit hat, umfasst, dass
beurteilt wird, ob die beiden RPR-Brückenschnittstellen der Zwischenringbrücke mit einer höheren Priorität jeweils mit den beiden RPR-Brückenschnittstellen an den beiden RPR-Ringen kommunizieren können;
wenn sie mit den beiden RPR-Brückenschnittstellen kommunizieren können, die Zwischenringbrücke die Zwischenringkommunikationsfähigkeit hat; die Zwischenringbrücke ansonsten keine Zwischenringkommunikationsfähigkeit hat.

14. Verfahren nach Anspruch 13, das ferner umfasst, dass
jede Zwischenringbrücke ihre eigene Topologiestrukturtabelle aktualisiert (201, 301);
wobei der Schritt des Beurteilens, ob die beiden RPR-Brückenschnittstellen der Zwischenringbrücke mit einer höheren Priorität jeweils mit den beiden RPR-Brückenschnittstellen an den beiden RPR-Ringen kommunizieren können, umfasst, dass
beurteilt wird, ob die beiden RPR-Brückenschnittstellen der Zwischenringbrücke mit einer höheren Priorität jeweils in den entsprechenden Topologiestrukturtabellen der beiden RPR-Ringe vorhanden sind, zu denen die Zwischenringbrücke gehört;
wenn die beiden RPR-Brückenschnittstellen in den Tabellen vorhanden sind, die beiden RPR-Brückenschnittstellen der Zwischenringbrücke mit einer höheren Priorität jeweils mit den eigenen beiden RPR-Brückenschnittstellen an den beiden RPR-Ringen kommunizieren können; andernfalls die beiden RPR-Brückenschnittstellen der Zwischenringbrücke mit einer höheren Priorität jeweils nicht mit den eigenen beiden RPR-Brückenschnittstellen an den beiden RPR-Ringen kommunizieren können.

15. Verfahren nach Anspruch 3, 4 oder 5, wobei die Redundanzgruppeninformation zumindest eine Prioritätsinformation der Zwischenringbrücke und den Primär-/ Sekundärzustand umfasst.

16. Verfahren nach Anspruch 1, 2, 3, 4, 5, 6, 7, 8, 10 oder 11, wobei die primäre Zwischenringbrücke für ein Weiterleiten aller Pakete oder von Paketen mit denselben Eigenschaften verantwortlich ist.

## Revendications

1. Procédé de redondance des passerelles entre anneaux RPR (pour *« Resilient Packet Ring* » - Anneau souple à commutation par paquets), comprenant les étapes consistant à :
configurer une priorité pour chaque passerelle entre anneaux ;
constituer un groupe de redondance avec plus d'une passerelle entre anneaux pour deux anneaux RPR ;
configurer une passerelle entre anneaux dans le groupe de redondance comme passerelle entre anneaux primaire, chargée de l'acheminement des paquets ;
configurer la ou les autres passerelles entre anneaux comme passerelles entre anneaux secondaires ; et
choisir une passerelle entre anneaux ayant la priorité maximale et possédant une capacité de communication entre anneaux comme passerelle entre anneaux primaire lorsque le groupe de redondance change (202, 203, 204, 206, 302, 303, 304, 305).

2. Procédé selon la revendication 1, dans lequel le changement du groupe de redondance comprend :
le changement de la topologie des anneaux RPR composant le groupe de redondance.

3. Procédé selon la revendication 1, comprenant en outre l'étape consistant à :
configurer par chaque passerelle entre anneaux une table d'informations sur les noeuds afin de stocker des informations de groupe de redondance pour chacune des passerelles entre anneaux dans le groupe de redondance.

4. Procédé selon la revendication 3, dans lequel le changement du groupe de redondance comprend :
le changement des informations de groupe de redondance d'une passerelle entre anneaux dans le groupe de redondance.

5. Procédé selon la revendication 4, comprenant en outre les étapes consistant à :
configurer un message de commande ;
lorsque les informations de groupe de redondance d'une passerelle entre anneaux dans le groupe de redondance changent, diffuser par la passerelle entre anneaux le message de commande transportant les informations de groupe de redondance la concernant dans le groupe de redondance ; et
lorsqu'une ou plusieurs autres passerelles entre anneaux reçoivent le message de commande, choisir une passerelle entre anneaux ayant la priorité maximale et possédant la capacité de communication entre anneaux comme passerelle entre anneaux primaire.

6. Procédé selon la revendication 1, dans lequel l'étape de choix d'une passerelle entre anneaux ayant la priorité maximale et possédant la capacité de communication entre anneaux comme passerelle entre anneaux primaire comprend les étapes consistant à :
lorsque la passerelle entre anneaux primaire ne possède pas de capacité de communication entre anneaux ou lorsqu'il existe une passerelle entre anneaux ayant une priorité supérieure et possédant la capacité de communication entre anneaux dans le groupe de redondance, abandonner l'état primaire (202, 203, 204, 206) par la passerelle entre anneaux primaire ; et
lorsqu'une passerelle entre anneaux secondaire possède la capacité de communication entre anneaux et lorsqu'il n'existe pas d'autre passerelle entre anneaux ayant une priorité supérieure et possédant la capacité de communication entre anneaux dans le groupe de redondance, promouvoir la passerelle entre anneaux secondaire en passerelle entre anneaux primaire (302, 303, 304, 305).

7. Procédé selon la revendication 6, dans lequel l'étape d'abandon de l'état primaire par la passerelle entre anneaux primaire comprend les étapes consistant à :
déterminer par la passerelle entre anneaux primaire si elle possède la capacité de communication entre anneaux (202) et, si elle ne possède pas cette capacité, abandonner l'état primaire (206) ;
sinon, déterminer par la passerelle entre anneaux primaire s'il existe une passerelle entre anneaux ayant une priorité supérieure et possédant la capacité de communication entre anneaux (203, 204) et, s'il existe une telle passerelle entre anneaux, abandonner l'état primaire (206) par la passerelle entre anneaux primaire.

8. Procédé selon la revendication 6, dans lequel l'étape de promotion de la passerelle entre anneaux secondaire en passerelle entre anneaux primaire comprend les étapes consistant à :
déterminer par la passerelle entre anneaux secondaire si elle possède la capacité de communication entre anneaux (302) ;
si elle possède la capacité de communication entre anneaux, déterminer par la passerelle entre anneaux secondaire s'il existe une passerelle entre anneaux ayant une priorité supérieure et possédant la capacité de communication entre anneaux (303, 304) ;
s'il n'existe pas de telle passerelle entre anneaux, promouvoir la passerelle entre anneaux secondaire en passerelle entre anneaux primaire (305).

9. Procédé selon la revendication 7 ou 8, dans lequel l'étape de détermination de la capacité de communication entre en anneaux comprend les étapes consistant à :
déterminer si les deux interfaces de passerelle RPR fonctionnent normalement et, si elles fonctionnent normalement, déterminer qu'elle possède la capacité de communication entre anneaux ; sinon, qu'elle ne possède pas la capacité de communication entre anneaux.

10. Procédé selon la revendication 7, dans lequel l'étape où la passerelle entre anneaux primaire détermine s'il existe une passerelle entre anneaux ayant une priorité supérieure et possédant la capacité de communication entre anneaux comprend les étapes consistant à :
déterminer s'il existe une passerelle entre anneaux ayant une priorité supérieure dans le groupe de protection (203) ;
s'il existe une telle passerelle entre anneaux dans le groupe de protection, déterminer si la passerelle entre anneaux ayant une priorité supérieure dans le groupe de protection possède la capacité de communication entre anneaux (204) ; et
si la passerelle entre anneaux avec une priorité supérieure dans le groupe de protection possède la capacité de communication entre anneaux, abandonner l'état primaire (206) par la passerelle entre anneaux primaire.

11. Procédé selon la revendication 1, dans lequel l'étape où la passerelle entre anneaux secondaire détermine s'il existe une passerelle entre anneaux ayant une priorité supérieure et possédant la capacité de communication entre anneaux comprend les étapes consistant à :
déterminer s'il existe une passerelle entre anneaux ayant une priorité supérieure dans le groupe de redondance (303) ;
s'il n'existe pas de telle passerelle entre anneaux, promouvoir la passerelle entre anneaux secondaire en passerelle entre anneaux primaire (305) ;
s'il existe une telle passerelle entre anneaux, déterminer si la passerelle entre anneaux avec une priorité supérieure dans le groupe de redondance possède la capacité de communication entre anneaux (304) ; et
si la passerelle entre anneaux avec une priorité supérieure dans le groupe de redondance ne possède pas cette capacité de communication entre anneaux, promouvoir la passerelle entre anneaux secondaire en passerelle entre anneaux primaire (305).

12. Procédé selon la revendication 10 ou 11, dans lequel chaque passerelle entre anneaux configure une table d'informations sur les noeuds contenant au moins des informations de priorité de toutes les passerelles entre anneaux dans le groupe de redondance ; et
l'étape de détermination de l'existence d'une passerelle entre anneaux avec une priorité supérieure comprend les étapes consistant à :
consulter la table d'information sur les noeuds configurée par elle-même ; et
déterminer s'il existe une passerelle entre anneaux avec une priorité supérieure dans le groupe de redondance, sur la base des enregistrements dans la table d'information sur les noeuds.

13. Procédé selon la revendication 10 ou 11, dans lequel l'étape déterminant si la passerelle entre anneaux avec une priorité supérieure dans le groupe de redondance possède la capacité de communication entre anneaux comprend les étapes consistant à :
déterminer si les deux interfaces de passerelle RPR de la passerelle entre anneaux avec priorité supérieure peuvent communiquer avec les deux interfaces de passerelle RPR sur les deux anneaux RPR, respectivement ;
si elles peuvent communiquer avec les deux interfaces de passerelle RPR, la passerelle entre anneaux possède la capacité de communication entre anneaux ; sinon, la passerelle entre anneaux ne possède pas de capacité de communication entre anneaux.

14. Procédé selon la revendication 13, comprenant en outre les étapes consistant à :
rafraîchir par chaque passerelle entre anneaux sa propre table de structure de topologie (201, 301) ;
dans lequel l'étape déterminant si les deux interfaces de passerelle RPR de la passerelle entre anneaux avec une priorité supérieure peuvent communiquer avec les deux interfaces de passerelle RPR sur les deux anneaux RPR, respectivement, comprend les étapes consistant à :
déterminer si les deux interfaces de passerelle RPR de la passerelle entre anneaux avec une priorité supérieure, respectivement, existent dans les tables de structure de topologie correspondantes des deux anneaux RPR auxquels appartient la passerelle entre anneaux ;
si les deux interfaces de passerelle RPR existent dans les tables, les deux interfaces de passerelle RPR de la passerelle entre anneaux avec une priorité supérieure peuvent communiquer avec ses deux propres interfaces de passerelle RPR sur les deux anneaux RPR, respectivement ;
sinon, les deux interfaces de passerelle RPR de la passerelle entre anneaux avec une priorité supérieure ne peuvent pas communiquer avec ses deux propres interfaces de passerelle RPR sur les deux anneaux RPR, respectivement.

15. Procédé selon la revendication 3, 4 ou 5, dans lequel les informations de groupe de redondance comprennent au moins des informations de priorité de la passerelle entre anneaux et l'état primaire/secondaire.

16. Procédé selon la revendication 1, 2, 3, 4, 5, 6, 7, 8, 10 ou 11, dans lequel la passerelle entre anneaux primaire est chargée d'acheminer tous les paquets ou des paquets ayant les mêmes caractéristiques.
